# EUROPEAN PATENT APPLICATION

(11) **EP 1 466 725 A1**
(43) Date of publication of application: **13.10.2004**
(21) Application number: 03447090.6
(22) Date of filing: 11.04.2003
(51) Int. Cl.: B32B 27/36

(54) **Transparent retort-stable high barrier laminates**

(71) Applicant: Amcor Flexibles Europe A/S, 8700 Horsens (DK)
(72) Inventor: Utz, Helmar, Dr., 3425 Koppingen (CH)
(74) Representative: Van Malderen, Michel

(57) **Abstract**

The present invention is related to a transparent plastic film laminate having low permeability to gases comprising at least two gas barrier layers comprising a substrate layer with at least one barrier coating wherein said gas barrier layer are oriented face-to-face within said laminate and separated from each other by a retort-resistant interlayer to reach extremely high gas barrier properties.

## Description

### Field of the invention

The present invention is related to flexible multilayer plastic film laminates such as transparent gas barrier multilayer packaging films and more particularly multilayer laminates with improved post-retort properties.

### State of the art

The latest trend in the field of packaging, and in particular in the food and pharmaceutical industry, is to replace glass and metal containers by flexible packaging. Flexible packagings have numerous advantages such as environmental soundness, lower weight, no risk of injury (broken glass, sharp metal edges), ease of use to empty contents.

The shelf life of typical products packed in glass or metal containers is 1 to 3 years due to high barrier properties, especially low oxygen and water vapour transmission rates. The performance of a flexible barrier packaging is always measured in comparison of these almost gas tight packaging containers.

Modern food packaging lines using optionally (controlled atmosphere packaging (CAP)) gas flush request packaging film with high barrier properties (to the gas atmosphere in presence) to prevent oxygen up-take or water loss of the product packed; additionally, the packaging material has to be retort-stable as the packs have to undergo a heat treatment to ensure stability at ambient conditions.

These requirements can be fulfilled by using aluminium film-based laminates. However, aluminium foil, film combinations have a series of drawbacks. They are not compatible with microwave applications, the packed product is invisible so that no visual control is possible; furthermore, metal detectors require transparent, and metal-free structures.

To allow a shelf life of 12 to 18 months, laminates with AlOx or SiOx coated polyester films for the barrier are currently used. The barrier properties of such laminates can suffer from the retort treatment: the thin barrier coatings (AlOx, SiOx) are sensitive and can crack under the stress. Therefore, typical post-retort oxygen barrier values of such laminates are in the range of 0.5 to 3 cm³/(m² d bar) at 23°C/75% relative humidity. This range value is not sufficient to allow a shelf life similar to glass or metal food containers, therefore, laminates with better post-retort barrier properties are required.

It is a well known, by those skilled in the art, that the lamination of two metallized plastic films with the two metal layers face-to-face, reaches excellent barrier values (e. g. an oxygen barrier of <0.1 cm³/(m² d bar) at 23°C/75% r. h.) can be achieved. Such a concept is disclosed in the documents EP 154428-A2, GB 2103999 and EP 069642.

The same "double barrier layer" principle works with transparent barrier films, e.g. with AlOx or SiOx coated polyethylene-glycol therephtalate (PETP). Such a combination is disclosed in the document GB 2210826.

The use of such laminates theoretically assures a longer shelf life for retort applications. Unfortunately, the post-retort barrier is typically not as good as expected.

### Aims of the invention

The present invention aims to provide a retort-resistant flexible and transparent high gas barrier film laminate which is especially, but not exclusively, useful as packaging material for gas sensitive materials.

### Summary of the invention

The present invention discloses a transparent plastic film laminate having low permeability to gases comprising at least two gas barrier layers comprising a substrate layer with at least one barrier coating characterised in that said gas barrier layers are oriented face-to-face with said barrier coating within said laminate and separated from each other by at least one retort-resistant interlayer.

Optionally, the laminate of the present invention further comprises tie layers for extrusion lamination.

In a particular embodiment of the present invention, the tie layers are selected from the group consisting of modified polypropylene such as silan grafted polypropylene, maleic anhydride grafted polypropylene.

Additionally, the laminate of the present invention is characterised in that said laminate further comprises adhesives.

In a further embodiment of the present invention the laminate is characterised in that said adhesives are selected from the group consisting of polyurethane, epoxy amid systems and organo silanes.

Furthermore, the present invention discloses a laminate characterised in that the barrier coating is selected from the group consisting of SiOx, AlOx, magnesium oxide, cerium oxide, hafnium oxide, tantalum oxide, titanium oxide, yttrium oxide, zirconium oxide and mixtures thereof.

In an additional embodiment, the laminate is characterised in that the barrier coating is carbon based.

The present invention discloses furthermore a laminate characterised in that the substrate layer and/or the retort-resistant interlayer is selected from the group consisting of polyesters, polypropylene, polycarbonate, polyamide, polyethylene, polyacetals, polystyrene, poly-4-methylpentene-1, ethylene vinyl alcohol copolymers, polyphenylene oxide, polysulfone, regenerated cellulose, polyacrylonitrile, polyvinylchloride, crosslinked polyvinyl alcohol, elastomers, or mixings thereof.

A key property of the laminate of the present invention is that the oxygen permeability of said laminate is lower than 0.5 cm³/(m² day bar) at 23°C/ 75% relative humidity after a retort treatment.

Another key property of the laminate of the present invention is that the oxygen permeability of said laminate is lower than 0.2 cm³/(m² day bar) at 23°C/ 75% relative humidity after a retort treatment.

Another object of the present invention is to disclose a method for the production of a multilayer laminate characterised in that the barrier coating is created by physical and /or chemical vapour deposition, plasma enhanced chemical vapour deposition or plasma polymerisation.

In a particular embodiment, said method is characterised in that said multilayer is produced in an in-vacuo coating/lamination process.

The invention further discloses a method for the production of the substrate layer and/or the retort-resistant interlayer and /or the tie layer characterised in that said layers are coextruded and/or laminated.

Finally, the invention discloses the use of the laminate of the present invention as a packaging material for high gas barrier applications of a plastic film laminate as defined in any of the previous claims.

### Short description of the drawings

Fig. 1 shows a low retort-stable PETP-AlOx/AlOx-PETP/OPA/PP film laminate according to the prior art.

Fig. 2 shows a retort-stable PETP-AlOx/OPA/AlOx-PETP/PP film laminate according to the present invention.

Fig. 3 shows a retort-stable PETP-SiOx/OPA/SiOx-PETP/PP film laminate according to the present invention.

Fig. 4 shows a retort-stable PETP-AlOx/tie-PA-tie/AlOx-PETP/PP.

### Detailed description of the invention and preferred embodiments

A typical structure such as PETP-AlOx 12µ/Oriented PA 15µ/ Polypropylene 70µ, of which the oxygen transmission is 1.5 cm³/(m² d bar) is well known by those skilled in the art and is considered as a good reference in this field.

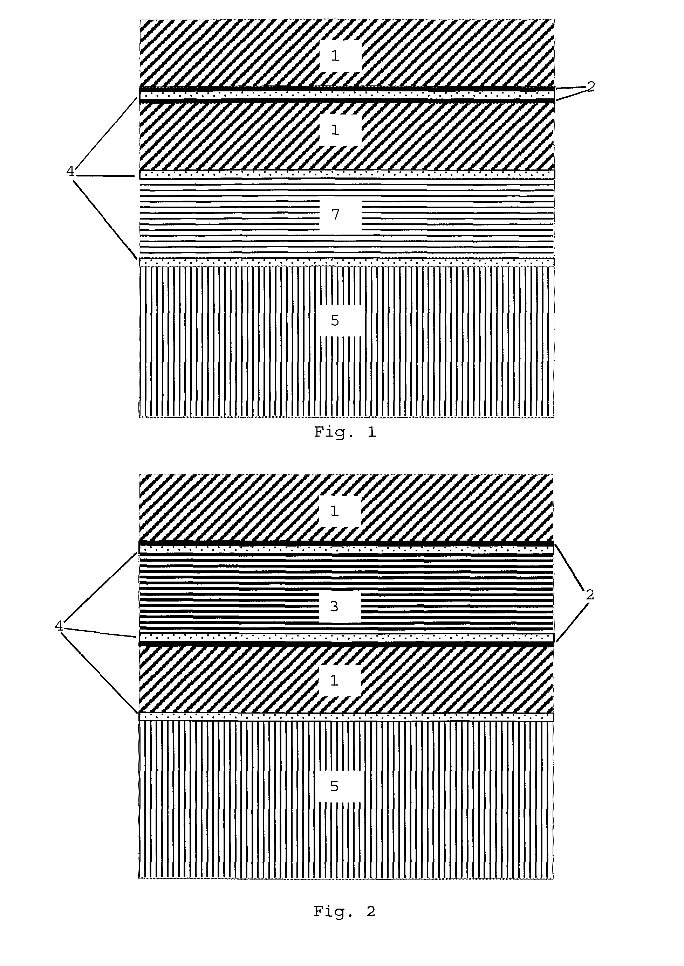

The comparison of a face-to-face laminate as mentioned above is described in Figure 1, PETP-AlOx 12µ/AlOx-PETP 12µ / OPA 15µ/ PP 70µ and has an oxygen barrier of 0.4 cm³/(m² d bar) at 23°C/75% r. h.). After retort treatment of this film, the oxygen barrier drops to 8 cm³/(m² d bar). As previously mentioned, the barrier coatings are sensitive and the heat treatment can damages the layers.

The previous example illustrates the obviousness of a need for a transparent retort-stable high barrier laminate at a moderate cost.

As a result of several tests, it was discovered in a first embodiment of the present invention that a retort-stable high barrier laminate can be produced by locating a retort-resistant interlayer between the two coated barrier layers instead of laminating the inorganic barrier coatings face-to-face. This interlayer can be, non-exclusively, a web material such as an oriented PA film

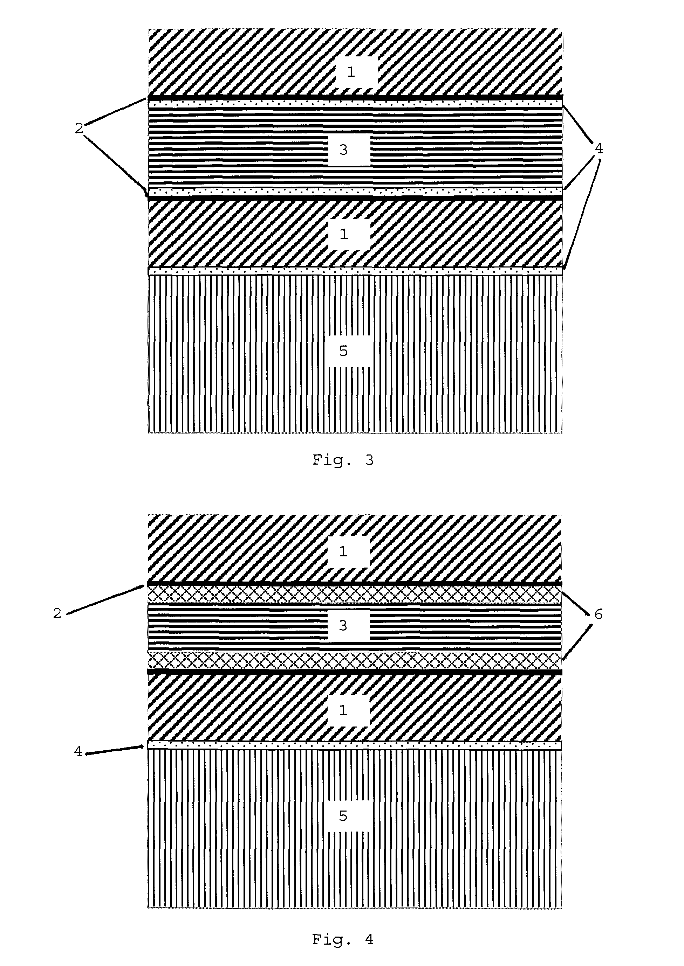

The adhesive laminated structure shown in Figure 2 (PETP-AlOx 12µ/ OPA 15µ/ AlOx-PETP 12µ /PP 70µ) yields a pre- and post-retort oxygen barrier of 0.2 cm³/(m² d bar) at 23°C/75% r. h.) compared to a post-retort 8 cm³/(m² d bar) for the structure PETP-AlOx 12/AlOx-PETP 12µ/ OPA 15µ /PP 70µ (Figure 1). Similar good results were achieved with a structure based on SiOx-coated PETP (PETP-SiOx 12µ /OPA 15µ /SiOx-PETP 12µ/PP 70µ), where the pre-and post-retort oxygen barrier is <0.1 cm³/(m² d bar).

Examples of retort resistant interlayers, but not limited hereto, are elastomers, non-oriented polyamide, cellophane, cross-linked PVAL, and others. For the substrate layer 1, any film with a brittle coating, e.g. SiOx or AlOx, can be used independent of the production process. Non limitative examples of substrate are typically polyesters, polypropylene, polycarbonate, or polyamide. The laminates can be produced by adhesive, thermal, and/or extrusion lamination. Furthermore, tie layers 6 can also be used. Tie layers 6 are generally modified and in particular grafted polymers. The grafting with e.g. maleic anhydride or silan groups is destined to improve the adherence to the underlying layer.

The interlayer between the two transparent barrier vacuum deposited layers can also optionally be introduced prior to or during the vacuum coating, for example by sequentially vacuum coating the substrate with a transparent inorganic barrier layer, applying to this an organic layer (in the form, non-exclusively, of either a web material or a coating), and then vacuum coating on said web material or said coating a further layer of a transparent inorganic barrier material.

If the interlayer in this structure is in the form of a coating, it can be applied either on a coating machine, as described in patent GB2246795, or during the vacuum coating process itself via the process variously known as in-vacuo polymer coating (IVC) or polymer multilayer coating (PML), described in the literature (eg J.Affinito, Polymer Film Deposition by a New Vacuum Process, Proceedings of Society of Vacuum Coaters, 2002 et loc cit., and numerous other papers by other authors).

The resulting, non-exclusive structure is, for example, PETP-AlOx/polyacrylate/AlOx-PETP. Another possibility to produce a similar non-exclusive structure is adhesive lamination of e.g. PETP-AlOx-polyacrylate to AlOx-PETP to form PETP-AlOx-polyacrylate/adhesive/AlOx-PETP or laminate two PETP-AlOx-polyacrylate layers to form PETP-AlOx-polyacrylate /adhesive/polyacrylate-AlOx-PETP.

### EXAMPLES OF APPLICATIONS

### EXAMPLE 1

To both sides of a 15 µ thick OPA, a 12µ-thick PETP-AlOx film is adhesive-laminated with the AlOx-side facing to the polyamide (PETP-AlOx 12/OPA 15/AlOx-PETP 12). Additionally, a 70µ-thick Cast PP layer is adhesive-laminated to one side of the pre-laminate resulting in the following structure:

### PETP-AlOx 12/adhesive/OPA 15/adhesive/AlOx-PETP 12/adhesive /PP 70

A commercial available retort stable 2 component polyurethane adhesive in a quantity of 2 to 6 g/m2 is used. The pre- and post-retort oxygen transmission rate of this laminate is 0.2 cm³/(m² d bar) at 23°C/75% r. h.) (retort conditions: 125°C/30 min).

### EXAMPLE 2

To both sides of a 15µ-thick OPA, a 12µ-thick PETP-SiOx film is adhesive-laminated with the SiOx-side facing to the polyamide (PETP-SiOx 12/OPA 15/SiOx-PETP 12). Additionally, a 70µ-thick Cast PP layer is adhesive-laminated to one side of the pre-laminate resulting in the following structure:

### PETP-SiOx 12/adhesive/OPA 15/adhesive/SiOx-PETP 12/adhesive /PP 70

A commercial available retort stable 2 component polyurethane adhesive in a quantity of 2 to 6 g/m2 is used. The pre- and post-retort oxygen transmission rate of this laminate is 0.1 cm³/(m² d bar) at 23°C/75% r. h.) (retort conditions: 125 °C/30 min).

### EXAMPLE 3

To both sides of a 20µ-thick cast polyamide film, a 12my-thick PETP-AlOx film is adhesive-laminated with the AlOx-side facing to the polyamide (PETP-AlOx 12/PA 20/AlOx-PETP 12). Additionally, a 50µ-thick CPP layer is adhesive-laminated to one side of the pre-laminate resulting in the following structure:

### PETP-AlOx 12/adhesive/PA 20/adhesive/AlOx-PETP 12/adhesive /PP 50

A commercial available retort stable 2 component polyurethane adhesive in a quantity of 2 to 6 g/m2 is used. The pre- and post-retort oxygen transmission rate of this laminate is 0.2 cm³/(m² d bar) at 23°C/75% r. h.) (retort conditions: 125 °C/30 min).

### EXAMPLE 4

Two 12µ-thick PETP-AlOx films are co-extrusion-laminated with a low melting point polyamide 6/12 using PP tie layers (tie 5/PA 6/12 15/tie 5). The tie layers are commercial available maleic anhydrate crafted PP. The AlOx-sides are facing to the tie layers (PETP-AlOx 12/tie-PA-tie 25/AlOx-PETP 12). Additionally, a 50µ-thick CPP layer is adhesive laminated to one side of the pre-laminate giving the following structure:

### PETP-AlOx 12/tie-PA-tie 25/AlOx-PETP 12/adhesive/PP 50

A commercial available retort stable 2 component polyurethane adhesive in a quantity of 2 to 6 g/m2 is used. The pre- and post-retort oxygen transmission rate of this laminate is 0.2 cm³/(m² d bar) at 23°C/75% r. h.) (retort conditions: 125°C/30 min).

### EXAMPLE 5

A 12µ-thick PETP film is in-vacuo coated with AlOx. In a second step around 1 g/m2 of acrylate monomer is in-line evaporated on the AlOx-side of the film. This film is combined with the AlOx-side of a second PETP-AlOx film in-line in-vacuo. The entrapped acrylate monomer is polymerised by means of an scanning e-beam. Additionally, a 60µ-thick CPP layer is adhesive laminated to one side of the pre-laminate giving the following structure:

### PETP-AlOx-polyacrylate-AlOx-PETP 12/12/adhesive/PP 70

A commercial available retort stable 2 component polyurethane adhesive in a quantity of 2 to 6 g/m2 is used. The pre- and post-retort oxygen transmission rate of this laminate is below 0.1 cm³/(m² d bar) at 23°C/75% r. h.) (retort conditions: 125°C/30 min).

The present invention allows the production of transparent and/or metal-free retort-stable laminates with very high post-retort barrier properties (<0.5 cm³/(m² d bar) at 23°C/75% r. h.).

A shelf life typically greater than 12 months can be achieved and therefore such laminates represents a credible alternative for metal and glass containers.

### Legend

1. Substrate layer ( Polyester, PP, PC, PA, ...)
2. Barrier coating (AlOx, SiOx, ...)
3. Retort-resistant interlayer(OPA, ...)
4. Adhesive (PUR..)
5. Thermoformable layer (Polyester, PP, PS, PC, ...)
6. Tie Layer
7. Oriented polyamide

## Claims

1. A transparent plastic film laminate having low permeability to gases comprising at least two gas barrier layers comprising a substrate layer (1) with at least one barrier coating (2) **characterised in that** said gas barrier layers are oriented face-to-face with said barrier coating (2) within said laminate and separated from each other by at least one retort-resistant interlayer (3).

2. A laminate as in claim 1 **characterised in that** said laminate further comprises tie layers (6) for extrusion lamination.

3. A laminate as in claim 2 **characterised in that** said tie layers are selected from the group consisting of modified polypropylene such as silan grafted polypropylene, maleic anhydride grafted polypropylene.

4. A laminate as in claim 1 **characterised in that** said laminate further comprises adhesives (4).

5. A laminate as in claim 4 **characterised in that** said adhesives (4) are selected from the group consisting of polyurethane, epoxy amid systems and organo silanes.

6. A laminate as in claim 1 **characterised in that** the barrier coating (2) is selected from the group consisting of SiOx, AlOx, magnesium oxide, cerium oxide, hafnium oxide, tantalum oxide, titanium oxide, yttrium oxide, zirconium oxide and mixtures thereof.

7. A laminate as in claim 1 **characterised in that** the barrier coating (2) is carbon based.

8. A laminate as in claim 1 **characterised in that** the substrate layer (1) and/or the retort-resistant interlayer (3) is selected from the group consisting of polyesters, polypropylene, polycarbonate, polyamide, polyethylene, polyacetals, polystyrene, poly-4-methylpentene-1, ethylene vinyl alcohol copolymers, polyphenylene oxide, polysulfone, regenerated cellulose, polyacrylonitrile, polyvinylchloride, crosslinked polyvinyl alcohol, elastomers, or mixings thereof.

9. A laminate as in any of the previous claims **characterised in that** the oxygen permeability of said laminate is lower than 0.5 cm³/(m² day bar) at 23°C/75% relative humidity after a retort treatment.

10. A laminate as in any of the previous claims **characterised in that** the oxygen permeability of said laminate is lower than 0.2 cm³/(m² day bar) at 23°C/75% relative humidity after a retort treatment.

11. A method for the production of a multilayer laminate as in claim 1 **characterised in that** the barrier coating (2) is created by physical and /or chemical vapour deposition, plasma enhanced chemical vapour deposition or plasma polymerisation.

12. A method for the production of multilayer laminate as in claim 1 **characterised in that** said multilayer is produced in an in-vacuo coating/lamination process.

13. Method for the production of the substrate layer (1) and/or the retort-resistant interlayer (3) and /or the tie layer (6) **characterised in that** said layers are coextruded and/or laminated.

14. The use as a packaging material for high gas barrier applications of a plastic film laminate as defined in any of the previous claims.
